# EUROPEAN PATENT APPLICATION

(11) **EP 4 597 936 A1**
(43) Date of publication of application: **06.08.2025**
(21) Application number: 25153893.0
(22) Date of filing: 24.01.2025
(51) Int. Cl.: H04L 25/02

(54) **PHYSICAL-LAYER SIGNALING TECHNIQUES FOR MAINTAINING DC LINE BALANCE**

(30) Priority: 31.01.2024 US 202418428998
(71) Applicant: Analog Devices, Inc., Wilmington, MA 01887 (US)
(72) Inventor: Barney, Bryson, Wilmington, 01887 (US); Hammerschmied, Clemens, Wilmington, 01887 (US)
(74) Representative: Wallin, Nicholas James

(57) **Abstract**

In some embodiments, a communication device configured to receive power and communicate data signals via a differential pair of conductors is provided. The communication device comprises circuitry configured to generate or receive a common mode voltage via the differential pair; and at least one of circuitry configured to, in response to detecting an edge of an incoming digital signal via an input conductor, transmit an outgoing pair of pulses based on the detected edge via the differential pair; or circuitry configured to detect an incoming pair of pulses via the differential pair and adjust a signal transmitted via an output conductor indicating a logical value based on the incoming pair of pulses.

## Description

### CROSS REFERENCE TO RELATED APPLICATIONS

This application claims priority to United States patent application no. 18/428998, filed 31 January 2024.

### TECHNICAL FIELD

This application relates generally to differential signaling, and in particular but not exclusively, relates to differential signaling techniques for power-over-data environments.

### BACKGROUND

In differential signaling, voltages of two conductors are compared in order to determine a logical value represented by the signal. Typically, a high voltage differential will represent a first logical value (e.g., a zero) and a low voltage differential will represent a second logical value (e.g., a one). The differential signals may be separated by a DC voltage offset if the data wires are used to transmit power to a load. One problem in implementing differential signaling coupled with DC power transmission is the concept of maintaining direct current (DC) balance. If too many symbols of the same value are transmitted on the differential pair of conductors, the voltage difference may be absorbed by coupling circuitry, and data may be corrupted or lost. This is a problem when differential signaling is being provided over the same differential pair of conductors that is being used to provide power, as the coupling circuitry includes capacitors intended to prevent DC from arriving at the transceiver and is even more likely to filter out runs of matching logical values.

### SUMMARY

This summary is provided to introduce a selection of concepts in a simplified form that are further described below in the Detailed Description. This summary is not intended to identify key features of the claimed subject matter, nor is it intended to be used as an aid in determining the scope of the claimed subject matter.

In some embodiments, a method of receiving power and transmitting data signals via a differential pair of conductors is provided. A common mode voltage is generated or received via the differential pair. In response to detecting an edge of an incoming digital signal via an input conductor, a pair of pulses is transmitted based on the edge via the differential pair.

In some embodiments, a method of receiving power and data signals over a differential pair of conductors is provided. A common mode voltage is generated or received via the differential pair. A signal is transmitted indicating a logical value via an output conductor. A pair of pulses is detected via the differential pair, and the signal indicating the logical value is adjusted based on the pair of pulses.

In some embodiments, a communication device configured to receive power and communicate data signals via a differential pair of conductors is provided. The communication device comprises circuitry configured to generate or receive a common mode voltage via the differential pair; and at least one of: circuitry configured to, in response to detecting an edge of an incoming digital signal via an input conductor, transmit an outgoing pair of pulses based on the detected edge via the differential pair; or circuitry configured to detect an incoming pair of pulses via the differential pair and adjust a signal transmitted via an output conductor indicating a logical value based on the incoming pair of pulses.

### BRIEF DESCRIPTION OF THE DRAWINGS

The foregoing aspects and many of the attendant advantages of this invention will become more readily appreciated as the same become better understood by reference to the following detailed description, when taken in conjunction with the accompanying drawings, wherein:
FIG. 1 is a schematic illustration of a system that uses pairs of pulses to maintain DC line balance during differential signaling in a power-over-data environment, according to various aspects of the present disclosure.
FIG. 2A and FIG. 2B are schematic drawings that illustrate a non-limiting example embodiment of a communication device according to various aspects of the present disclosure.
FIG. 3 is a signal diagram that illustrates a non-limiting example embodiment of signaling according to various aspects of the present disclosure.
FIG. 4 is a flowchart that illustrates a non-limiting example embodiment of a method of receiving power and communicating over a differential pair of conductors according to various aspects of the present disclosure.

### DETAILED DESCRIPTION

Previous attempts to solve the DC line balance problem typically use software to generate specific data encodings prior to the physical layer in order to avoid runs of the same value greater than a given length. While these techniques can address DC line balance issues, they require additional software to be added to a software stack to generate the encodings. Techniques that maintain DC line balance within the physical layer circuitry without the use of any specific encoding of the data in software would be preferred, particularly in cases where power is being added to a physical layer in a system in which a software stack without the DC line balancing encoding is already in place.

While there have been some attempts at addressing the DC line balance at the physical layer, these attempts have not been ideal. For example, on/off keying (OOK) can be used to signal digital values. However, OOK encoding is sensitive to noise near the carrier frequency, and can lead to pulse width distortion. Other methods require a clock for intra-transceiver encoding. What is desired are techniques for differential signaling that address the DC line balance problem at the physical layer without using a clock signal or synchronization between a transmitter and a receiver for successful communication.

In embodiments of the present disclosure, techniques are provided for differential signaling on a wired single pair of conductors that maintains DC line balance at the physical layer regardless of any data encoding. An edge-based, dual-pulse, reverse polarity return to common mode signaling technique is used to achieve the DC line balance without a clock or other encoding from outside the physical layer.

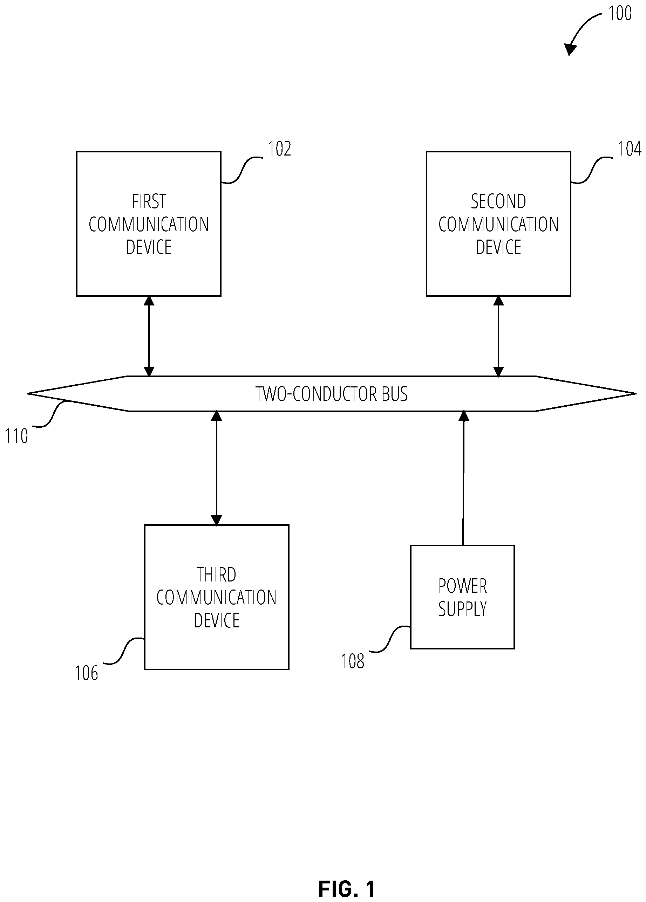

FIG. 1 is a schematic illustration of a system that uses pairs of pulses to maintain DC line balance during differential signaling in a power-over-data environment, according to various aspects of the present disclosure. In the system 100, a plurality of communication devices, including a first communication device 102, a second communication device 104, and a third communication device 106 are shown coupled to a two-conductor bus 110. In some embodiments, the communication devices may communicate using a half-duplex asynchronous technique, including but not limited to a universal asynchronous receiver-transmitter (UART) technique.

The two-conductor bus 110 may be any two conductors suitable for transmitting differential signals and power. As one non-limiting example, the two-conductor bus 110 may be two conductors of a twisted pair of conductors. As another non-limiting example, the two-conductor bus 110 may be two conductors of a ribbon cable. In other examples, any other types of conductors suitable for communicating differential signals may be used, including but not limited to traces on a printed circuit board. The term "differential pair" may be used interchangeably herein with the term "two-conductor bus," as both terms describe a pair of conductors that may be used in part to carry differential signals. By enabling both communication and power over two conductors instead of a greater number of conductors, the number of conductors is reduced, as separate pairs of conductors would typically be used for communication and power.

As shown, the system 100 also includes a power supply 108 coupled to the two-conductor bus 110. The power supply 108 may be any type of DC power supply, and may provide any suitable DC voltage to the two-conductor bus 110, including but not limited to any voltage in a range from 5V-24V. Though illustrated as a separate device in FIG. 1, in some embodiments, the power supply 108 may be incorporated into one of the communication devices in the system 100. Also, though only a single power supply 108 is illustrated, in some embodiments, more than one power supply 108 may be present within the system 100 and coupled to the two-conductor bus 110.

Though three communication devices are illustrated in FIG. 1, one will recognize that more or fewer communication devices may be present in the system 100 and coupled to the two-conductor bus 110. For example, in some embodiments, the two-conductor bus 110 may directly connect a first communication device 102 to a second communication device 104 without other communication devices being connected to the two-conductor bus 110. As another example, in some embodiments, the two-conductor bus 110 may have more than three communication devices coupled thereto.

The system 100 is illustrated and described as generic "communication devices" to avoid obscuring the inventive aspects of the present disclosure. In some embodiments, the communication devices may be coupled to microcontrollers or coupled to/included in other types of devices that may communicate via a two-conductor bus 110. As a non-limiting example, the system 100 may provide building automation functionality, with the communication devices coupled to or incorporated into devices including two or more of a controller device, a programmable logic controller (PLC) of an HVAC system or other physical plant machine, an environmental sensor, a security sensor, a building access system device, or any other type of device. In other embodiments, the system 100 may support factory automation or robotics applications. Building automation, factory automation, and robotics are non-limiting examples only, and in other embodiments, any other types of devices that communicate over a two-conductor bus 110 may be used in the system 100.

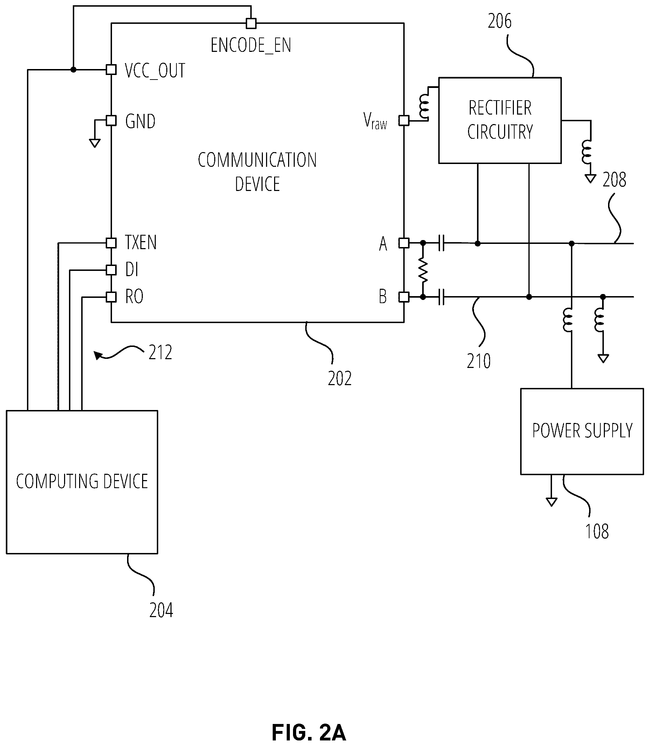

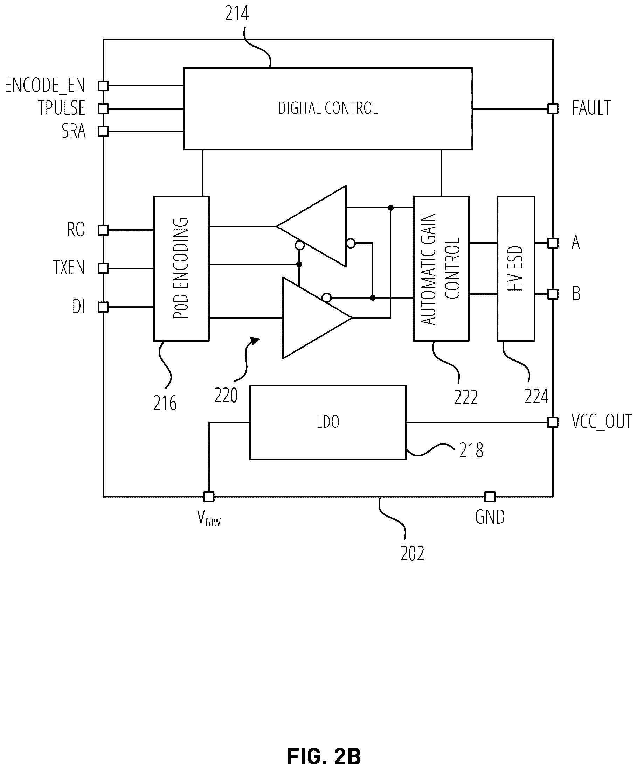

FIG. 2A and FIG. 2B are schematic drawings that illustrate a non-limiting example embodiment of a communication device according to various aspects of the present disclosure. The illustrated communication device 202 may be used to implement the first communication device 102, second communication device 104, and/or third communication device 106 in the system 100 of FIG. 1.

As shown in FIG. 2A, the communication device 202 is coupled to a first conductor 208 and a second conductor 210 of the two-conductor bus 110 at terminals labeled A and B, respectively. Though only a single communication device 202 is illustrated in FIG. 2A, it will be understood that at least one other communication device 202 may be coupled to the first conductor 208 and second conductor 210, as illustrated in FIG. 1.

Each of the first conductor 208 and the second conductor 210 is coupled to the communication device 202 through a capacitor, and the first conductor 208 and second conductor 210 are coupled together through a resistor between the capacitors and the communication device 202, as is common in differential signaling circuits. The capacitors are configured to block direct current from arriving at terminal A and terminal B, such that terminal A and terminal B receive and/or transmit the alternating current (AC) differential signals. In some embodiments, the circuitry for providing terminal A and terminal B may include circuitry compatible with an RS-485 communication standard.

Portions of the first conductor 208 and of the second conductor 210 further from the communication device 202 than the capacitors are also coupled to the communication device 202 through rectifier circuitry 206, an inductor, and a terminal labeled V_{raw}. This coupling provides the DC power from the first conductor 208 and second conductor 210 to the V_{raw} terminal. The inductor blocks the AC signal from reaching the V_{raw} terminal, and the rectifier circuitry 206 allows the DC power to be supplied to either one of the first conductor 208 or the second conductor 210. Any suitable circuitry may be used for the rectifier circuitry 206, including but not limited to a diode bridge. In some embodiments, the rectifier circuitry 206 may be omitted and the energized one of the conductors of the differential pair may be coupled to the V_{raw} terminal through an inductor.

As shown, the power supply 108 is also coupled to the two-conductor bus 110. Specifically, the power supply 108 is illustrated as being coupled to the first conductor 208, though by using the rectifier circuitry 206, the power supply 108 may be coupled to either the first conductor 208 or the second conductor 210 without affecting the functionality of the communication device 202. Similar to the V_{raw} terminal, the power supply 108 is coupled to the first conductor 208 via an inductor to block the AC signal from reaching the power supply 108.

The communication device 202 includes circuitry for generating and/or receiving differential signals corresponding to logical states indicated by digital signals received via digital signal terminals, such as terminal DI and terminal RO. In some embodiments, a voltage close to the supply voltage applied to terminal DI indicates a logical one/high logical value, and a voltage close to ground applied to terminal DI indicates a logical zero/low logical value. Similarly, in some embodiments, a voltage close to the supply voltage received on terminal RO is interpreted as a logical one/high logical value, while a voltage close to ground received on terminal RO is interpreted as a logical zero/low logical value. These terminals may be connected to a computing device 204 such as a microcontroller, a PLC, an ASIC, or any other suitable device for transmitting and receiving digital signals via one or more input/output conductors 212. The computing device 204 may be powered by the communication device 202 at the V_{raw} terminal and transmitted by the communication device 202 at the VCC_OUT terminal.

As illustrated, each of the terminals of the communication device 202 is coupled directly to its corresponding external wire. In some embodiments, this coupling may be accomplished via a direct wire connection, as a trace on a printed circuit board or a soldered wire connection. In some embodiments, a coupling to one or more of the terminals may be accomplished through removable coupling hardware, including but not limited to a modular connector/socket (e.g., an RJ11, RJ45, or other type of modular connector), a coaxial power plug/socket, an SAE connector, a USB plug/socket, or any other suitable type of removable coupling.

FIG. 2B illustrates additional components of the communication device 202. The differential terminals (terminal A and terminal B) are coupled to high-voltage electrostatic discharge circuitry (HV ESD 224) and automatic gain control circuitry 222, as is typical for differential signal communication. The automatic gain control circuitry 222 is electrically coupled to conversion circuitry 220 and encoding circuitry 216 for gaining up and recovering received signals that fall below acceptable thresholding. The logical value terminals (the RO terminal and the DI terminal) are electrically coupled to the encoding circuitry 216. A TXEN (Transmit Enable) terminal is also electrically coupled to the encoding circuitry 216, and may be used to change a half-duplex communication direction (e.g., a high voltage on TXEN places the transceiver in transmit mode, while a low voltage on TXEN places the transceiver in receive mode). In some embodiments, other circuitry (e.g., a DE/driver enable pin and a REN/receiver enable pin) may be used to provide similar functionality. Low-dropout regulator circuitry 218 may be included to regulate voltage between the V_{raw} terminal and the VCC_OUT terminal.

As shown, the communication device 202 also includes digital control circuitry 214. The digital control circuitry 214 provides functionality for controlling configurable aspects of the communication device 202. For example, the digital control circuitry 214 may accept signals via a TPULSE terminal to allow configuration of a pair of pulses length 318, an SRA terminal to allow configuration of a transmit signal slew rate, and an ENCODE_EN terminal to allow configuration of an encoding scheme. The digital control circuitry 214 may transmit signals via a FAULT terminal to indicate problems detected within the communication device 202.

If the communication device 202 is acting as a transmitter, then when digital signals are received via terminal DI, the circuitry of the communication device 202 generates differential signals and transmits them to the first conductor 208 and second conductor 210 based on the received digital signals. If the communication device 202 is acting as a receiver, then when differential signals are received via terminal A and terminal B, the circuitry of the communication device 202 generates digital signals and transmits them via terminal RO. In order to maintain DC line balance, the differential signals are generated and received as pairs of pulses, in which the differential voltage is shifted both above and below a common mode voltage prior to being returned to the common mode voltage. Since each high voltage differential is balanced by a low voltage differential regardless of the pattern of the data, DC line balance is maintained.

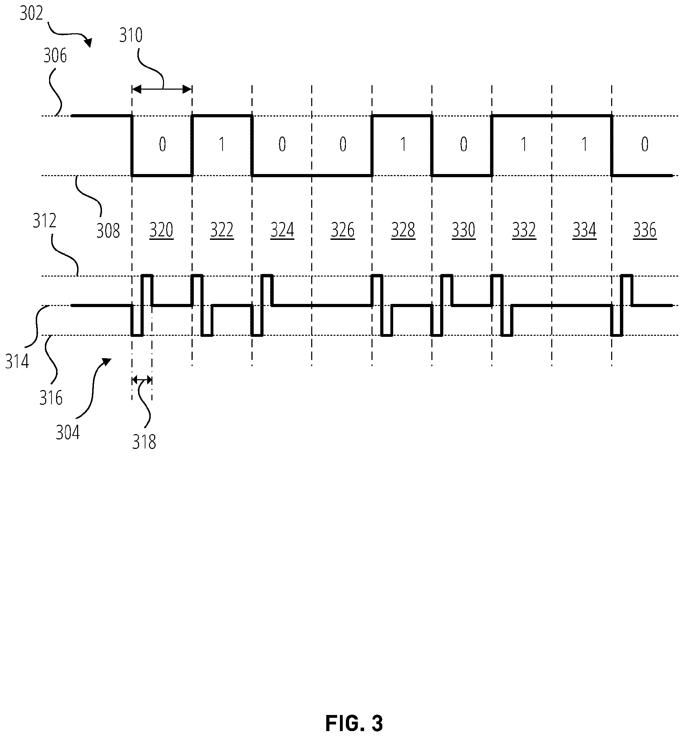

FIG. 3 is a signal diagram that illustrates a non-limiting example embodiment of signaling according to various aspects of the present disclosure. In FIG. 3, time moves from left to right, the bold solid lines represent signals, and the various dashed lines demarcate various aspects of the signals that will be described in further detail below.

The top portion of FIG. 3 illustrates a digital signal 302 received at or transmitted by terminal DI and/or terminal RO. The digital signal 302 illustrates indicated logic states, and may or may not illustrate a specific voltage applied to or detected at the terminals. The digital signal 302 alternates between a high logical value 306 (e.g., a one) and a low logical value 308 (e.g., a zero). The digital signal 302 includes bits generated at a data rate wherein a data interval length 310 specifies an amount of time between consecutive logical values. After an initial idle interval, the illustrated digital signal 302 includes a plurality of first data intervals 320-336, from first data interval 320 to ninth data interval 336.

It will be noted that an edge in the digital signal 302 occurs when the value transitions between the high logical value 306 and the low logical value 308, or vice versa. For example, an edge is present in the digital signal 302 between the first data interval 320 and the second data interval 322 (a transition from the low logical value 308 to the high logical value 306), and an edge is present between the second data interval 322 and the third data interval 324 (a transition from the high logical value 306 to the low logical value 308), but no edge is present between the third data interval 324 and the fourth data interval 326, because the logical value remains at the low logical value 308 in both data intervals.

The bottom portion of FIG. 3 illustrates differential signals 304 corresponding to the digital signal 302. As illustrated, the differential signals 304 are aligned horizontally (i.e., in time) with the digital signal 302, though the vertical scales between the digital signal 302 and the differential signal 304 may be different. The differential signals 304 show a high voltage differential 312 and a low voltage differential 316 compared to a common mode voltage 314, with the bold line indicating whether the common mode voltage 314, the high voltage differential 312, or the low voltage differential 316 is being generated and/or detected at a given point in time.

In the common mode voltage 314, the voltages detected on the first conductor 208 via terminal A and the second conductor 210 via terminal B match each other. At the high voltage differential 312, a voltage detected via terminal A is higher than a voltage detected via terminal B. At the low voltage differential 316, a voltage detected via terminal A is lower than a voltage detected via terminal B. This assignment of high and low voltage to terminal A and terminal B is an example only, and in some embodiments, the roles of these terminals may be reversed. In some embodiments, a difference between the high voltage differential 312 and the common mode voltage 314 matches (i.e., is the same as, or is within 25% of) a difference between the low voltage differential 316 and the common mode voltage 314.

Initially, the differential signal 304 is held at a common mode voltage 314. In embodiments of the present disclosure, when the circuitry of the communication device 202 detects an edge of the digital signal 302 (i.e., a transition from the high logical value 306 to the low logical value 308, or a transition from the low logical value 308 to the high logical value 306), the circuitry of the communication device 202 generates a pair of pulses that represents the transition. The pair of pulses includes a transition from the common mode voltage to one of the high voltage differential 312 or low voltage differential 316 depending on the direction of the edge, then a transition to the other of the high voltage differential 312 or the low voltage differential 316, before returning to the common mode voltage 314.

The order in which the differential signal 304 is transitioned to the high voltage differential 312 and the low voltage differential 316 indicates the direction of the transition. For example, in the first data interval 320, the edge in the digital signal 302 indicated a transition from the high logical value 306 to the low logical value 308. Accordingly, to indicate the transition from the high logical value 306 to the low logical value 308, the differential signal 304 transitions from the common mode voltage 314 to the low voltage differential 316, then from the low voltage differential 316 to the high voltage differential 312, prior to returning to the common mode voltage 314. As another example, in the second data interval 322, the edge in the digital signal 302 indicated a transition from the low logical value 308 to the high logical value 306. Accordingly, to indicate the transition from the low logical value 308 to the high logical value 306, the differential signal 304 transitions from the common mode voltage 314 to the high voltage differential 312, then from the high voltage differential 312 to the low voltage differential 316, prior to returning to the common mode voltage 314. These orders are a non-limiting example only, and in other embodiments, the reverse order of the transitions between the high voltage differential 312 and low voltage differential 316 may be used.

In some embodiments, the generation of the pairs of pulses is triggered by the detection of edges in the digital signal 302. This allows the communication to be performed without clock synchronization (or another type of synchronization) between the digital signal 302 and the differential signal 304. As shown, since the third data interval 324 and the fourth data interval 326 include consecutive low logical values 308, there is no edge in the digital signal 302 between the third data interval 324 and the fourth data interval 326. As such, there is no pair of pulses transmitted in the fourth data interval 326. Likewise, since the seventh data interval 332 and the eighth data interval 334 include consecutive high logical values 306, there is no edge in the digital signal 302 between the seventh data interval 332 and the eighth data interval 334. As such, there is no pair of pulses transmitted in the eighth data interval 334.

In some embodiments, each pair of pulses is generated for an amount of time illustrated as a pair of pulses length 318. During the pair of pulses length 318, an amount of time for which the high voltage differential 312 is generated matches (i.e., is equal to, or is within 25% of) an amount of time for which the low voltage differential 316 is generated. By using matching amounts of time for the high voltage differential 312 and the low voltage differential 316, DC line balance is maintained.

In some embodiments, the pair of pulses length 318 is less than the data interval length 310. As a non-limiting example, the data interval length 310 may be 100 µs (one ten-thousandth of a second), while the pair of pulses length 318 is 1 µs (one millionth of a second). By making the pair of pulses length 318 independent from the data interval length 310, the pair of pulses length 318 can be adjusted to optimize the magnetics of the differential signaling, which may be smaller at higher frequencies. In some embodiments, the pair of pulses length 318 may be adjustable or programmable within the communication device 202, such as by providing signals to the digital control circuitry 214.

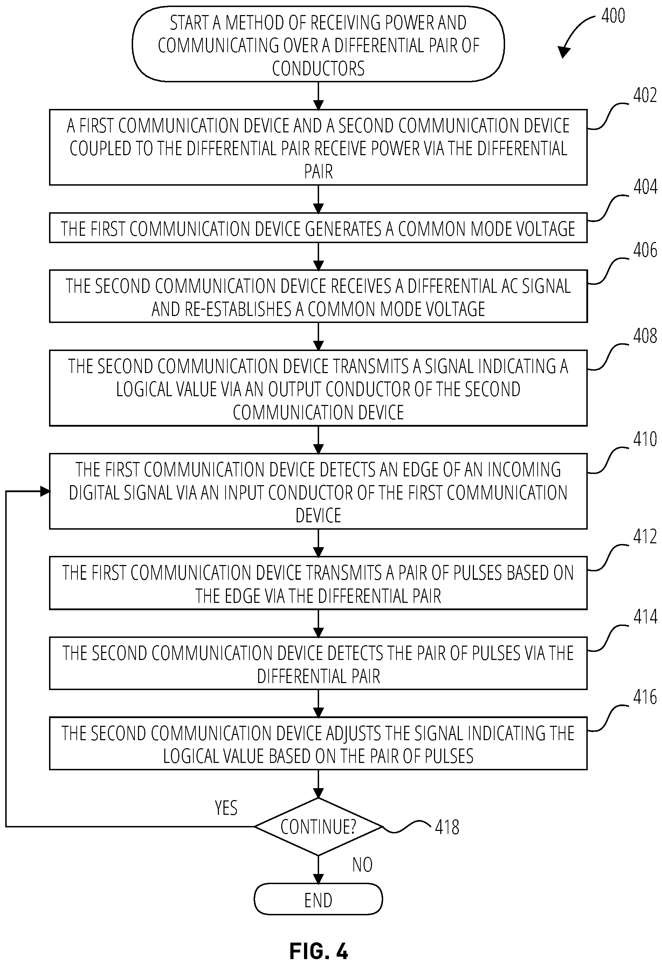

FIG. 4 is a flowchart that illustrates a non-limiting example embodiment of a method of receiving power and communicating over a differential pair of conductors according to various aspects of the present disclosure. The method 400 may be performed by a pair of communication devices 202, such as the first communication device 102 and second communication device 104 illustrated and described above. In the method 400, differential signals that use pairs of pulses to represent transitions between logical values are used for communication over a two-conductor bus 110 that is also used to transmit DC power.

From a start block, the method 400 proceeds to block 402, where a first communication device 102 and a second communication device 104 coupled to the differential pair receive power via the differential pair. As illustrated in FIG. 1 and FIG. 2A, the power may be provided to the differential pair by the power supply 108, and may be received by each communication device 202 through an inductor that blocks AC signals from the DC current. The power may, in turn, be provided by one or more of the communication devices 202 to a computing device 204 coupled thereto that communicates digital signals with the communication device 202, or may be provided by one or more of the communication devices 202 to some other device.

At block 404, the first communication device 102 generates a common mode voltage. While this common mode voltage is established across terminal A and terminal B, this voltage does not pass through the capacitors onto the first conductor 208 and second conductor 210, though differential signals do pass through the capacitors. At block 406, the second communication device 104 receives a differential AC signal and re-establishes a common mode voltage across terminal A and terminal B (i.e., after the series capacitors). In FIG. 3, the common mode voltage is illustrated as common mode voltage 314. In some embodiments, the common mode voltage established across terminal A and terminal B of the first communication device 102 may be different from the common mode voltage established across terminal A and terminal B of the second communication device 104, while in other embodiments, these common mode voltages may be the same.

At block 408, the second communication device 104 transmits a signal indicating a logical value via an output conductor of the second communication device 104. The output conductor may be the RO terminal or another terminal through which signals indicating logical values may be transmitted. In some embodiments, the second communication device 104 transmits a signal indicating a default logical value until a pair of pulses indicating a change in logical value is received. In some embodiments, instead of transmitting the default logical value, the second communication device 104 may refrain from transmitting any signal indicating a logical value until a first pair of pulses is received.

At block 410, the first communication device 102 detects an edge of an incoming digital signal via an input conductor of the first communication device 102. The input conductor may be the DI terminal or another terminal through which signal indicating logical values may be received. In some embodiments, the edge may be detected by sensing a voltage changing from a level indicating a first logical value to a level indicating a second logical value.

At block 412, the first communication device 102 transmits a pair of pulses based on the edge via the differential pair. The first communication device 102 transmits the pair of pulses by changing the voltages applied to terminal A and terminal B, thus applying the pair of pulses to the differential pair. In some embodiments, changing the voltages applied to terminal A and terminal B may include lowering the voltage applied to terminal B by an amount that matches (e.g., is equal to, or is within 10% of) an amount by which the voltage applied to terminal A is raised, or vice versa, thus creating a "differential" signal between the first conductor 208 and the second conductor 210.

In some embodiments, the first communication device 102 determines whether to transmit the high voltage differential 312 or the low voltage differential 316 first based on the logical value indicated after the edge. For example, in the embodiment illustrated in FIG. 3, if the logical value indicated after the edge is a low logical value 308, the low voltage differential 316 would be transmitted before the high voltage differential 312. Likewise, if the logical value indicated after the edge is a high logical value 306, the high voltage differential 312 would be transmitted before the low voltage differential 316. As also illustrated in FIG. 3, the first communication device 102 transmits the pair of pulses for an amount of time indicated by the pair of pulses length 318, which may be configurable, and with the high voltage differential 312 and low voltage differential 316 being transmitted for matching amounts of time during the pair of pulses length 318 After transmitting the pair of pulses, the first communication device 102 returns to transmitting the common mode voltage to the differential pair.

At block 414, the second communication device 104 detects the pair of pulses via the differential pair. In some embodiments, the second communication device 104 detects the pair of pulses by detecting that the differential voltage between the first conductor 208 and the second conductor 210 (as received at terminal A and terminal B) has shifted from the common mode voltage 314.

At block 416, the second communication device 104 adjusts the signal indicating the logical value based on the pair of pulses. In some embodiments, the adjusted signal may be transmitted in a similar manner as described above with respect to block 408. In some embodiments, the second communication device 104 may determine whether the pair of pulses indicates the high logical value 306 or the low logical value 308 by determining whether the high voltage differential 312 or the low voltage differential 316 is received first.

In some embodiments, the second communication device 104 may compare the logical value indicated by the pair of pulses to a logical value currently being indicated by an output signal from the second communication device 104, and may refrain from adjusting the signal indicating the logical value if the logical value indicated by the pair of pulses is the same as the logical value currently indicated by the output signal. Otherwise, if the logical value indicated by the pair of pulses is different from the logical value currently being indicated by the output signal from the second communication device 104, the second communication device 104 may adjust the output signal to instead indicate the logical value indicated by the pair of pulses. For example, if the signal output by the second communication device 104 currently indicates the low logical value 308 and the pair of pulses indicates the high logical value 306 by having the high voltage differential 312 come before the low voltage differential 316, then the second communication device 104 may adjust the signal output by the second communication device 104 to indicate the high logical value 306 instead of the low logical value 308.

The method 400 then proceeds to a decision block 418, where a determination is made regarding whether the method 400 should continue. Typically, the method 400 may continue for as long as power is supplied to the two-conductor bus 110, or otherwise as long as desired by an operator. If it is determined that the method 400 should continue, then the result of decision block 418 is YES, and the method 400 returns to block 410 to await a subsequent edge of the incoming digital signal. Otherwise, if it is determined that the method 400 should end, then the result of decision block 418 is NO, and the method 400 advances to an end block and terminates. One will note that by looping back to block 410 and awaiting a subsequent edge of the incoming digital signal, the method 400 will loop at a frequency that is approximately equal to the data interval length 310.

While illustrative embodiments have been described, it will be appreciated that various changes can be made therein without departing from the spirit and scope of the invention.

### EXAMPLES

The numbered paragraphs that follow include various non-limiting examples of embodiments of the present disclosure.

Example 1. A method of receiving power and transmitting data signals via a differential pair of conductors, the method comprising: generating or receiving a common mode voltage via the differential pair; and in response to detecting an edge of an incoming digital signal via an input conductor, transmitting a pair of pulses based on the edge via the differential pair.

Example 2. The method of example 1, wherein transmitting the pair of pulses includes generating a high voltage differential compared to the common mode voltage and generating a low voltage differential compared to the common mode voltage prior to returning to generating the common mode voltage.

Example 3. The method of example 2, wherein a difference between the high voltage differential and the common mode voltage matches a difference between the low voltage differential and the common mode voltage.

Example 4. The method of any one of examples 2 or 3, wherein an amount of time for which the high voltage differential is generated matches an amount of time for which the low voltage differential is generated.

Example 5. The method of any one of examples 2-4, further comprising determining whether the edge of the incoming digital signal indicates a transition from a first logical state to a second logical state or a transition from the second logical state to the first logical state; wherein, in response to determining that the edge of the incoming digital signal indicates the transition from the first logical state to the second logical state, transmitting the pair of pulses includes generating the high voltage differential before generating the low voltage differential; and wherein in response to determining that the edge of the incoming digital signal indicates the transition from the second logical state to the first logical state, transmitting the pair of pulses includes generating the low voltage differential before generating the high voltage differential.

Example 6. The method of any one of examples 1-5, wherein an amount of time for generating the outgoing pair of pulses is less than a data rate of the incoming digital signal.

Example 7. The method of any one of examples 1-6, further comprising receiving power via the differential pair.

Example 8. A method of receiving power and data signals over a differential pair of conductors, the method comprising: generating or receiving a common mode voltage via the differential pair; transmitting a signal indicating a logical value via an output conductor; and detecting a pair of pulses via the differential pair; and adjusting the signal indicating the logical value based on the pair of pulses.

Example 9. The method of example 8, wherein detecting the pair of pulses includes detecting a high voltage differential compared to the common mode voltage and detecting a low voltage differential compared to the common mode voltage prior to detecting a return to the common mode voltage.

Example 10. The method of example 9, wherein a difference between the high voltage differential and the common mode voltage matches a difference between the low voltage differential and the common mode voltage.

Example 11. The method of example 9 or 10, wherein an amount of time for which the high voltage differential is detected matches an amount of time for which the low voltage differential is detected.

Example 12. The method of any one of examples 8-11, wherein adjusting the signal indicating the logical value based on the pair of pulses includes: determining whether the pair of pulses indicates the logical value or a different logical value; and in response to determining that the pair of pulses indicates the different logical value, transmitting a signal indicating the different logical value via the output conductor.

Example 13. The method of any one of examples 8-12, wherein an amount of time for which the pair of pulses is detected is less than a data rate of logical values transmitted via the output conductor.

Example 14. The method of any one of examples 8-13, further comprising receiving power via the differential pair.

Example 15. A communication device configured to receive power and communicate data signals via a differential pair of conductors, the communication device comprising: circuitry configured to generate or receive a common mode voltage via the differential pair; and at least one of: circuitry configured to, in response to detecting an edge of an incoming digital signal via an input conductor, transmit an outgoing pair of pulses based on the detected edge via the differential pair; or circuitry configured to detect an incoming pair of pulses via the differential pair and adjust a signal transmitted via an output conductor indicating a logical value based on the incoming pair of pulses.

Example 16. The communication device of example 15, wherein transmitting the outgoing pair of pulses includes generating a high voltage differential compared to the common mode voltage and generating a low voltage differential compared to the common mode voltage prior to returning to generating the common mode voltage.

Example 17. The communication device of example 15 or 16, wherein detecting the incoming pair of pulses includes detecting a high voltage differential compared to the common mode voltage and detecting a low voltage differential compared to the common mode voltage prior to detecting a return to the common mode voltage.

Example 18. The communication device of any one of examples 15-17, further comprising circuitry configured to receive power via the differential pair.

Example 19. The communication device of example 18, further comprising circuitry to separate the power from the incoming pair of pulses or outgoing pair of pulses.

Example 20. The communication device of example 18 or 19, wherein the circuitry configured to receive power via the differential pair includes rectifier circuitry.

## Claims

1. A method of receiving power and transmitting data signals via a differential pair of conductors, the method comprising:
generating or receiving a common mode voltage via the differential pair; and
in response to detecting an edge of an incoming digital signal via an input conductor, transmitting a pair of pulses based on the edge via the differential pair.

2. The method of claim 1, wherein transmitting the pair of pulses includes generating a high voltage differential compared to the common mode voltage and generating a low voltage differential compared to the common mode voltage prior to returning to generating the common mode voltage.

3. The method of claim 2, further comprising determining whether the edge of the incoming digital signal indicates a transition from a first logical state to a second logical state or a transition from the second logical state to the first logical state;
wherein, in response to determining that the edge of the incoming digital signal indicates the transition from the first logical state to the second logical state, transmitting the pair of pulses includes generating the high voltage differential before generating the low voltage differential; and
wherein in response to determining that the edge of the incoming digital signal indicates the transition from the second logical state to the first logical state, transmitting the pair of pulses includes generating the low voltage differential before generating the high voltage differential.

4. The method of any of claims 1 to 3, wherein an amount of time for generating the outgoing pair of pulses is less than a data rate of the incoming digital signal.

5. A method of receiving power and data signals over a differential pair of conductors, the method comprising:
generating or receiving a common mode voltage via the differential pair;
transmitting a signal indicating a logical value via an output conductor; and
detecting a pair of pulses via the differential pair; and
adjusting the signal indicating the logical value based on the pair of pulses.

6. The method of claim 5, wherein detecting the pair of pulses includes detecting a high voltage differential compared to the common mode voltage and detecting a low voltage differential compared to the common mode voltage prior to detecting a return to the common mode voltage.

7. The method of claim 2 or 6, wherein a difference between the high voltage differential and the common mode voltage matches a difference between the low voltage differential and the common mode voltage.

8. The method of claim 2 or 6, wherein an amount of time for which the high voltage differential is generated or detected matches an amount of time for which the low voltage differential is generated or detected.

9. The method of any of claims 5 to 8, wherein adjusting the signal indicating the logical value based on the pair of pulses includes:
determining whether the pair of pulses indicates the logical value or a different logical value; and
in response to determining that the pair of pulses indicates the different logical value, transmitting a signal indicating the different logical value via the output conductor.

10. The method of any of claims 5 to 9, wherein an amount of time for which the pair of pulses is detected is less than a data rate of logical values transmitted via the output conductor.

11. The method of any of the preceding claims, further comprising receiving power via the differential pair.

12. A communication device configured to receive power and communicate data signals via a differential pair of conductors, the communication device comprising:
circuitry configured to generate or receive a common mode voltage via the differential pair; and
at least one of:
circuitry configured to, in response to detecting an edge of an incoming digital signal via an input conductor, transmit an outgoing pair of pulses based on the detected edge via the differential pair; or
circuitry configured to detect an incoming pair of pulses via the differential pair and adjust a signal transmitted via an output conductor indicating a logical value based on the incoming pair of pulses.

13. The communication device of claim 12, wherein transmitting the outgoing pair of pulses includes generating a high voltage differential compared to the common mode voltage and generating a low voltage differential compared to the common mode voltage prior to returning to generating the common mode voltage.

14. The communication device of claim 12 or 13, wherein detecting the incoming pair of pulses includes detecting a high voltage differential compared to the common mode voltage and detecting a low voltage differential compared to the common mode voltage prior to detecting a return to the common mode voltage.

15. The communication device of any of claims 12 to 14, wherein one or more of the following apply:
a) the device further comprises circuitry configured to receive power via the differential pair;
b) the device further comprises circuitry to separate the power from the incoming pair of pulses or outgoing pair of pulses; and/or
c) the circuitry configured to receive power via the differential pair includes rectifier circuitry.
